# EUROPÄISCHE PATENTANMELDUNG

(11) **EP 4 442 439 A2**
(43) Veröffentlichungstag der Anmeldung: **09.10.2024**
(21) Anmeldenummer: 24192668.2
(22) Anmeldetag: 02.05.2019
(51) Int. Cl.: B29C 65/78

(54) **VERBINDUNGSVERFAHREN FÜR KAROSSERIEDICHTUNGSELEMENTE**

(30) Priorität: 02.05.2018 DE 102018110496; 28.06.2018 DE 102018115622
(62) Teilanmeldung aus: 19722563.4
(71) Anmelder: CQLT SaarGummi Technologies S.à.r.l., 5544 Remich (LU)
(72) Erfinder: Schumacher, Volker, 66839 Schmelz (DE); Tessier, Bernard, 45270 Moulon (FR)
(74) Vertreter: Patentanwälte Bernhardt / Wolff Partnerschaft mbB

(57) **Zusammenfassung**

Die Erfindung betrifft ein Verfahren zur Verbindung des Stoßes von zwei Enden (3; 8) mindestens eines Karosseriedichtungselements (4; 9). Um eine sichere und schnelle Verbindung der Enden und bei der Verwendung eines Hohlkammerprofils zusätzlich einen ungehinderten Durchtritt von Luft und Feuchtigkeit zwischen Hohlkammern innerhalb des Karosseriedichtungselements über den Stoß hinweg zu ermöglichen, werden die Enden (3; 8) zuerst voneinander im Abstand angeordnet und auf mindestens ein Ende (3) ein formloses Verbindungsmittel (7) aufgebracht. Anschließend wird das Verbindungsmittel (7) erhitzt und die Enden (3; 8) in gegenseitigen Kontakt gebracht, wodurch die Enden (3; 8) am Stoß (10) durch das erhitzte Verbindungsmittel (7) stoffschlüssig verbunden werden.

## Beschreibung

Die Erfindung betrifft ein Verfahren zum Verbinden des Stoßes von zwei Enden mindestens eines Karosseriedichtungselements, insbesondere einer Kraftfahrzeug-Dichtung. Des Weiteren betrifft die Erfindung eine Vorrichtung zur Durchführung des Verfahrens.

Entsprechende Karosseriedichtungselemente werden in Kraftfahrzeugen dazu verwendet, Bauteile, wie beispielsweise eine Tür und den entsprechenden Türrahmen, gegeneinander abzudichten. Das Karosseriedichtungselement dient dabei sowohl dem Schutz gegen Eindringen von Feuchtigkeit, Lärm oder Schmutz als auch der Wärmeisolierung. Um eine möglichst lückenlose Abdichtung zu gewährleisten, werden oftmals mehrere, teilweise unterschiedlich ausgebildete Karosseriedichtungselemente an den Enden stoffschlüssig miteinander verbunden, beispielsweise mittels Verkleben oder Verschweißen.

Um eine Prozessautomatisierung eines entsprechenden Verbindungsverfahren zu ermöglichen, schlägt die EP 1 915 270 B1 vor, bei einem an der Oberfläche eines Fahrzeugs angebrachten Karosseriedichtungselements in Form eines Dichtungsprofils die Profilenden voneinander im Abstand anzuordnen und in den entstehenden Spalt eine Schweißfolie einzubringen, die zuerst erhitzt und anschließend gegen die gegenüberliegenden Profilenden des Dichtungsprofils gedrückt wird, um diese zu verschweißen. Nach dem Verbinden der Profilenden können die vorstehenden Reste der Schweißfolie, sofern diese zugänglich sind, manuell entfernt werden. Weißt das Dichtungsprofil hingegen Hohlkammern auf, werden diese durch die Schweißfolie verschlossen und damit der Austausch von Luft oder das Abfließen von Flüssigkeit in den Hohlkammern über den Stoß hinweg verhindert. Aus der WO 01/89811 A1 ist bekannt, eine derartige Schweißfolie mit einer Vielzahl von Schlitzen zu versehen oder Durchgangslöcher in die Folie einzubringen, um einen Durchtritt von Luft zwischen den Hohlkammern über den Stoß hinweg zu ermöglichen. Da trotz entsprechender Schlitze oder eingebrachter Löcher jedoch immer eine Querschnittsreduzierung am Stoß vorliegt, behindert auch eine derart bearbeitete Schweißfolie den Durchtritt von Luft und Feuchtigkeit zwischen den Hohlkammern über den Stoß. Gerade bei einer horizontalen Lagerung des Dichtungsprofils im Bereich des Stoßes kann es zudem zu einer Ansammlung von Flüssigkeit kommen, beispielsweise Kondenswasser, welches sich aufgrund der Schwerkraft in einen unteren Bereich der Hohlkammer ansammelt und nicht über ein in Bezug auf die Hohlkammer mittig angeordnetes Loch in der Schweißfolie abfließen kann.

Aufgabe der Erfindung ist es, ein Verfahren zum Verbinden des Stoßes von zwei Enden mindestens eines Karosseriedichtungselements zu schaffen, welches eine sichere und schnelle Verbindung der Enden und bei der Verwendung von Karosseriedichtungselementen mit einer oder mehreren Hohlkammern zusätzlich einen ungehinderten Durchtritt von Luft und Feuchtigkeit zwischen Hohlkammern innerhalb des Karosseriedichtungselements über den Stoß hinweg ermöglicht.

Diese Aufgabe wird dadurch gelöst, dass gemäß dem Verfahren die Enden zuerst voneinander beabstandet angeordnet sind und auf mindestens ein Ende ein formloses Verbindungsmittel aufgebracht wird. Anschließend wird das Verbindungsmittel erhitzt und die Enden zeitgleich oder nachfolgend in gegenseitigen Kontakt gebracht, wodurch die Enden am Stoß durch das erhitzte Verbindungsmittel stoffschlüssig verbunden werden. Das Erhitzen des Verbindungsmittels kann dabei vor dem gegenseitigen Kontakt der Enden am Stoß oder auch erst nach dem Kontakt erfolgen. Auf diese Art können sowohl die Enden von einem Karosseriedichtungselement miteinander verbunden werden, um eine ringförmige Dichtung zu bilden, wie auch die Enden mehrerer separater Karosseriedichtungselemente mit gleichem oder bei ausreichendem Überlappungsbereich an der Verbindungsstelle auch unterschiedlichem Querschnitt, um einen Übergang zu bilden.

Bei den Karosseriedichtungselementen kann es sich um Dichtungsprofile, also üblicherweise mittels Extrusion hergestellten länglichen Dichtungen mit konstantem Querschnitt, oder um Formteile jeglicher Geometrie, beispielsweise im Spritzgussverfahren hergestellte Eckstücke, handeln. Zudem kann das Verbindungsmittel auf dem gesamten Ende des Karosseriedichtungselements oder nur auf einem Teilbereich der Kontaktfläche aufgebracht werden. Als Ende des Karosseriedichtungselements ist diejenige Kontaktfläche an einem Karosseriedichtungselement zu verstehen, an welche das weitere Ende desselben oder ein Ende eines weiteren Karosseriedichtungselements befestigt werden soll. Diese Kontaktfläche kann also überall an einem Karosseriedichtungselement vorgesehen sein und ist räumlich nicht auf einen vorgelagerten Endbereich beschränkt.

Anstelle nur eines Endes kann das Verbindungsmittel auch auf beide gegenüberliegende Enden aufgebracht werden wodurch sich gegebenenfalls die Haltekraft erhöht. Zudem kann das Aufbringen des Verbindungsmittels und das Verbinden der Enden in derselben Maschine oder in unterschiedlichen Maschinen mit zeitlichem Abstand erfolgen. Beispielsweise ist es denkbar, dass bei Karosseriedichtungselementen in Form von länglichen Dichtungsprofilen beim Ablängen entsprechender Dichtungsprofile auf mindestens ein Profilende bereits ein Verbindungsmittel aufgebracht wird, die Dichtungsprofile jedoch zwischenzeitlich gelagert und in einem späteren Arbeitsschritt - gegebenenfalls auch erst direkt am Fahrzeug - durch Erhitzen des Verbindungsmittels miteinander verbunden werden.

Bevorzugt kann als formloses Verbindungsmittel ein Schüttgut, insbesondere ein Pulver (besonders bevorzugt mit einer Korngröße kleiner 200 µm) oder Granulat, eine Flüssigkeit oder eine Paste verwendet werden. Hierdurch ist es möglich, das Verbindungsmittel exakt dosiert und damit effizient auf die Enden aufzubringen, so dass es zu keiner wesentlichen Reduzierung des Querschnitts der Hohlkammer am Stoß durch hervorstehendes Verbindungsmittel kommt. Zudem ist ein entsprechend formloses Verbindungsmittel universell bei jedem Profilquerschnitt bzw. jeder Kontaktfläche ohne weiteres aufbringbar.

Besonders bevorzugt kann das Verbindungsmittel direkt oder über einen Zwischenträger auf das mindestens eine Ende aufgebracht werden. Als Zwischenträger kann beispielsweise eine Platte dienen, auf welche das formlose Verbindungsmittel entsprechend der Kontaktfläche des zu verbindenden Karosseriedichtungselements aufgebracht wird. Hierbei ist es zudem möglich, mehrere derartige Zwischenträger mit Verbindungsmittel in einem parallelen Arbeitsprozess vorzubereiten, um eine besonders hohe Taktrate beim Verbinden der Karosseriedichtungselemente zu erreichen. Das Auftragen des Verbindungsmittels kann dabei manuell, teilautomatisiert oder vollautomatisiert erfolgen.

Das Verbindungsmittel kann durch Aufsprühen, Aufrollen oder punktweises Auftragen direkt auf das mindestens eine Ende und/oder den Zwischenträger aufgebracht werden. Die Haftung auf dem Ende oder dem Zwischenträger kann dabei mittels Adhäsion oder elektrostatische Ladung, wie dies bei Pulverlacken zur Metallbeschichtung bekannt ist, bewirkt werden. Das Aufsprühen kann bevorzugt in einer geschlossenen Kammer erfolgen, in welcher überschüssiges Verbindungsmittel abgesaugt und wiederverwendet wird. Der Zwischenträger und/oder das Ende kann zudem erhitzt werden, um ein Anhaften des Verbindungsmittels zu erleichtern. Ein besonders präziser Auftrag von Verbindungsmittel kann dabei mittels einer robotergeführten Spritz- oder Extrusionsdüse erreicht werden. Hierzu kann beispielsweise ein Führungsgestell vorgesehen sein, welches eine Bewegung der Düse parallel zu dem Stoß ermöglicht, so das mit der Düse das Verbindungsmittel ähnlich dem Schmelzschichtungsverfahren punktweise in Form einzelner Verbindungsmittelpunkte, linienförmig in Form einer Raupe oder auch flächig an dem mindestens einen Ende oder auf dem Zwischenträger aufbringbar ist.

Alternativ oder zusätzlich kann das Verbindungsmittel und/oder das mindestens eine Ende bzw. der Zwischenträger elektrostatisch aufgeladen werden, um das Verbindungsmittel insbesondere punktweise festzuhalten. Der Zwischenträger kann dabei wie die Bildtrommel eines Laserdruckers lokal begrenzt elektrostatisch aufgeladen werden, so das nur dort entsprechend entgegengesetzt geladene Teilchen des Verbindungsmittels elektrostatisch haften. Um die Übertragung des Verbindungsmittels von dem Zwischenträger auf das mindestens eine Ende zu erleichtern, kann zudem vorgesehen sein, den Zwischenträger zu entladen, sobald das Verbindungsmittel mit dem Ende in Kontakt kommt. Hierdurch wird vorteilhaft ein Ablösen des Verbindungsmittels von dem Zwischenträger und ein Auftragen des Verbindungsmittels auf das mindestens eine Ende erleichtert.

In einer alternativen Ausführungsform kann das Verbindungsmittel auch durch Kontaktieren des mindestens einen Endes mit einer Verbindungsmittelschicht oder mit einem Zwischenträger aufgebracht werden. Hierbei kann das Verbindungsmittel insbesondere mit einer definierten Schichtstärke in einem Behälter vorgesehen werden, so dass bei einem Kontaktieren des mindestens einen Endes mit der Verbindungsmittelschicht eine definierte Menge an Verbindungsmittel aufgebracht wird. Dies kann beispielsweise dadurch erreicht werden, dass vor jedem Kontaktieren ein Abstreifer mit definiertem Abstand zum Boden des Behälters überschüssiges Verbindungsmittel abstreift, sodass nur eine definierte Schichtstärke an Verbindungsmittel am Behälterboden verbleibt.

Das Erhitzen des auf das mindestens eine Ende aufgebrachten Verbindungsmittels kann vorzugsweise mit Hilfe einer Heizeinrichtung, insbesondere einem IR-Heizelement, einem Heizluftgebläse oder einem Laser, erfolgen. Alternativ kann auch ein Mikrowellengenerator verwendet werden, um vorzugsweise in dem Verbindungsmittel vorgesehene Metallteilchen zu erhitzen. Durch die Heizeinrichtung wird das Verbindungsmittel bevorzugt aufgeschmolzen, also mindestens bis zu einer spezifischen Schmelztemperatur erhitzt, so dass das Verbindungsmittel (zähflüssig wird und besonders gut an den gegenüberliegenden Enden haftet. Anstelle der Heizeinrichtung kann jedoch auch die Restwärme des Karosseriedichtungselements aus einem vorgeschalteten Bearbeitungsschritt, beispielsweise dem Extrudieren des Karosseriedichtungselements als Dichtungsprofil, genutzt werden, um das Verbindungsmittel zu erhitzen. Sobald das Verbindungsmittel abgekühlt ist, bildet dieses eine stoffschlüssig Verbindung zwischen den Enden.

Es kann zudem vorgesehen sein, dass der Zwischenträger und/oder das mindestens eine Ende vor der Aufbringung des Verbindungsmittels zusätzlich erhitzt werden, um die Haftung des Verbindungsmittels an dem Zwischenträger bzw. dem Ende zu erleichtern. Das Ende kann dabei in einem separaten Bearbeitungsschritt erhitzt werden oder eine Restwärme aus einem vorgeschalteten Bearbeitungsschritt, beispielsweise dem Extrudieren des Karosseriedichtungselements als Dichtungsprofil, aufweisen. Vorzugsweise wird dabei der Zwischenträger und/oder das mindestens eine Ende vor der Aufbringung des Verbindungsmittels auf eine Temperatur erhitzt, welche unterhalb der Schmelztemperatur des Verbindungsmittels liegt. Demnach wird das Verbindungsmittel beim Kontakt mit dem Zwischenträger oder dem mindestens einen Ende nicht aufgeschmolzen, sondern lediglich erweicht, wodurch sich die Haftung an dem Zwischenträger oder dem mindestens einen Ende erhöht. Das Erhitzen des Verbindungsmittels kann dabei direkt durch Wärmeeintrag in das Verbindungsmittel wie auch indirekt durch Erwärmung des Zwischenträgers oder des mindestens einen Endes erreicht werden. Vorteilhaft kann das Verbindungsmittel, der Zwischenträger und/oder das mindestens eine Ende vor Kontakt mit dem Verbindungsmittel auf eine Temperatur unterhalb der Schmelztemperatur, bevorzugt auf bis zu 200 °C, insbesondere bis zu 150 °C, erhitzt werden und zur Verbindung der Enden des mindestens einen Karosseriedichtungselements ist ein Erhitzen des Verbindungsmittels mindestens auf die Schmelztemperatur, insbesondere auf eine Temperatur von 120 °C bis 300 °C, vorteilhaft.

Um einen präzisen Auftrag des Verbindungsmittels auf den Zwischenträger oder das mindestens eine Ende zu ermöglichen, kann vorgesehen sein, dass Abschnitte des Zwischenträgers oder des mindestens einen Karosseriedichtungselements, auf welche kein Verbindungsmittel aufgebracht werden soll, mittels einer Schablone abgedeckt werden. Die Schablone kann dabei derart verwendet werden, dass diese beim Erhitzen des Zwischenträgers, des mindestens einen Endes und/oder des Verbindungsmittels die übrigen Abschnitte des Zwischenträgers bzw. des Karosseriedichtungselements gegen die Wärmestrahlung abdeckt und/oder beim Auftrag des Verbindungsmittels beispielsweise mittels Aufsprühen oder Aufrollen ein Kontakt des Verbindungsmittels mit den übrigen Abschnitten des Zwischenträgers und/oder des Karosseriedichtungselements verhindert. Die Schablone kann dabei entsprechend präpariert sein, beispielsweise elektrostatisch geladen, gekühlt und/oder beschichtet sein, um ein Anhaften des Verbindungsmittels an der Schablone zu verhindern.

Bevorzugt umfasst das Verbindungsmittel einen thermoplastischen und/oder duroplastischen Werkstoff, wobei der thermoplastische Werkstoff durch Erhitzen verflüssigbar ist und der duroplastische Werkstoff unter Hitzeeinwirkung und/oder aufgrund chemischer Reaktion aushärtet. Das Verbindungsmittel kann des Weiteren einstoffig oder als Stoffgemisch ausgebildet sein, beispielsweise als Paste (Suspension) mit einem hohen Gehalt an Festkörpern. Insbesondere zur Verbindung von Karosseriedichtungselementen aus unterschiedlichen Werkstoffen kann das Verbindungsmittel auch mehrschichtig aus mindestens zwei Komponenten bestehen, wobei eine erste Komponente eine besonders gute Haftwirkung mit dem Werkstoff des ersten Karosseriedichtungselements und die zweite Komponente eine besonders gute Haftwirkung mit dem Werkstoff des zweiten Karosseriedichtungselements bietet. Die beiden Komponenten des Verbindungsmittels können derart ausgewählt sein, dass diese zudem gut aneinander haften, alternativ kann zwischen den zwei Komponenten jedoch auch mindestens eine weitere Komponente vorgesehen sein, welche u.a. als Haftvermittler zwischen den beiden äußeren Komponenten wirkt. Die mindestens zwei Komponenten können dabei separat auf die zu verbindenden Enden aufgetragen werden und erst beim anschließenden Verbinden der Enden verbunden werden. Alternativ ist es jedoch auch möglich, die beiden Komponenten insbesondere schichtweise auf ein Ende des Karosseriedichtungselements aufzutragen, wobei die für den Werkstoff dieses Karosseriedichtungselements ausgelegte Komponente zuerst aufgetragen wird und anschließend, ggf. nach dem Auftrag einer oder mehrerer Zwischenschichten, die zweite Komponente aufgetragen wird, welche eine besonders gute Verbindung mit dem Werkstoff des weiteren Karosseriedichtungselement ermöglicht. Die zweite Komponente kommt dann mit dem weiteren Karosseriedichtungselement erst in Kontakt, wenn die beiden Enden der Karosseriedichtungselemente verbunden werden.

Die Aufbringung des formlosen Verbindungsmittels kann vor der Befestigung des Karosseriedichtungselements an einer Karosserie eines Fahrzeugs oder während bzw. nach einer zumindest abschnittsweisen Befestigung des Karosseriedichtungselements an der Karosserie erfolgen.

Erfolgt die Aufbringung des formlosen Verbindungsmittels vor der Befestigung des Karosseriedichtungselements an der Karosserie, können mit dem formlosen Verbindungsmittel versehene Karosseriedichtungselemente in einem separaten Schritt hergestellt werden. Dies ermöglicht die Vorbereitung bereits abgelängter und mit formlosem Verbindungsmittel versehener Karosseriedichtungselemente ggf. beim Hersteller der Karosseriedichtungselemente, so dass die Montage am Fahrzeug besonders schnell erfolgen kann. Hierbei können die Profilenden vor der Montage des Karosseriedichtungselements an der Karosserie oder auch während bzw. nach der Montage des Karosseriedichtungselements an der Karosserie durch das Verbindungsmittel verbunden werden.

Bei der Aufbringung des formlosen Verbindungsmittels während oder nach der zumindest abschnittsweisen Befestigung des Karosseriedichtungselements an der Karosserie können mehrere Arbeitsschritte simultan ausgeführt werden, was besondere kurze Produktionszeiten zur Folge hat. So kann beispielsweise das formlose Verbindungsmittel auf ein an der Karosserie bereits befestigtes erstes Ende des Karosseriedichtungselements aufgebracht werden, während der übrige Abschnitt des Karosseriedichtungselements noch an der Karosserie befestigt wird.

Das Karosseriedichtungselement kann vor einer Befestigung an einer Karosserie eines Fahrzeugs passgenau auf die notwendige Länge oder mit Übermaß abgelängt und bevorratet werden. Beim Ablängen mit Übermaß wird das Karosseriedichtungselement üblicherweise um eine geringe Überlänge von z.B. 1 - 500 mm länger abgelängt, um Toleranzen auszugleichen. Das Ablängen kann dabei bevorzugt erst im Zuge des Montageprozesses des Dichtungselements an der Fahrzeugtür erfolgen, insbesondere nach der zumindest teilweisen bzw. vollständigen Befestigung des Karosseriedichtungselements an der Karosserie des Fahrzeugs, so dass das Ablängen besonders präzise erfolgt und ein Spalt zwischen den Enden vermieden wird.

Alternativ kann auch vorgesehen sein, dass das Karosseriedichtungselement von einer Vorratswicklung entnommen und erst nach einer zumindest abschnittsweisen Befestigung an einer Karosserie eines Fahrzeugs abgelängt wird. Eine derartige Vorratswicklung wird auch als Endlosdichtung bezeichnet und umfasst eine Profildichtung, welche ein Vielfaches der Länge eines einzelnen an der Karosserie anzubringenden Karosseriedichtungselements aufweist, wobei die einzelnen Karosseriedichtungselemente durch Abtrennen von der Vorratswicklung in der gewünschten Länge erzeugt werden. Eine Vorratswicklung hat den Vorteil, dass hieraus eine große Anzahl an einzelnen Karosseriedichtungselementen hergestellt werden können und die Vorratswicklung besonders platzsparend gelagert und einfach zum Hersteller der Fahrzeuge geliefert werden kann. Bei der vorteilhaften Verarbeitung einer Vorratswicklung bzw. Endlosdichtung erfolgt das Ablängen des Karosseriedichtungselements abhängig vom jeweiligen Fahrzeugtyp und damit sehr individuell erst unmittelbar im Produktionsprozess des Fahrzeughersteller, so dass beim Fahrzeughersteller nicht verschiedene Längen von Karosseriedichtungselementen bevorratet werden müssen. Heutige Türdichtungen eines PKWs weisen üblicherweise eine Länge von ca. 3,5 m auf, die Anlieferform einer heute üblichen Vorratswicklung bzw. Endlosdichtung liegt bei teilweise mehr als der 100-fachen Länge eines einzelnen Karosseriedichtungselements.

Das formlose Verbindungsmittel kann vor dem Ablängen auf ein Ende des Karosseriedichtungselements aufgebracht werden, beispielsweise auf das freie Ende des auf der Vorratswicklung befindlichen Dichtungsstrangs. Das Karosseriedichtungselement kann dann direkt von der Vorratswicklung ggf. maschinell an der Karosserie montiert und anschließend abgelängt werden. Vor der Verbindung der beiden Enden kann dann ggf. zusätzlich noch ein formloses Verbindungsmittel auf das zweite Ende aufgebracht werden. Alternativ kann jedoch die Aufbringung des formlosen Verbindungsmittels auf mindestens eines der Enden erst nach dem Ablängen des Karosseriedichtungselements erfolgen. Wird das Karosseriedichtungselement direkt passgenau auf die notwendige Länge abgelängt/ gekürzt, kann auf einem oder beiden Enden das formlose Verbindungsmittel aufgebracht werden. Wird das Karosseriedichtungselement zuerst mit Übermaß abgelängt, kann das formlose Verbindungsmittel bereits auf das eine Ende und nach dem passgenauen Ablängen ggf. auch auf das weitere Ende aufgebracht werden. Alternativ kann das formlose Verbindungsmittel auf das eine oder beide Enden aufgebracht werden, nachdem das Karosseriedichtungselement von dem Übermaß auf die passgenaue Länge abgelängt wurde. In jedem Fall hat es sich als besonders vorteilhaft herausgestellt, das formlose Verbindungsmittel kurze Zeit nach dem Ablängen/Schneiden des Karosseriedichtungselements auf das entsprechende Ende aufzubringen, da das formloses Verbindungsmittel dann besonders gut haftet.

In einer besonders vorteilhaften Ausführungsform kann in einer ggf. maschinellen Montage des Karosseriedichtungselements an der Fahrzeugtür bzw. Karosserie die Verbindung der beiden Profilenden des Karosseriedichtungselements in den Montageprozess des Automobilherstellers integriert werden. Bei der Variante bei welcher das Karosseriedichtungselement von einer Vorratswicklung verarbeitet wird, kann das formlose Verbindungsmittel folglich während drei unterschiedlicher Prozessschritte auf das je nach Prozessschritt eine freie Profilende oder beide Profilenden des Karosseriedichtungselements aufgetragen werden (siehe folgende Varianten A-C).
A) Vor dem Start der Montage eines noch nicht abgelängten Karosseriedichtungselements an der Karosserie eines Fahrzeugs kann auf das zu diesem Zeitpunkt schon einseitig frei zugängliche Profilende des Karosseriedichtungselements ein formloses Verbindungsmittel aufgetragen werden.
B) Während der Montage des zumindest schon abschnittsweise befestigten, aber noch nicht abgelängten Dichtungselements kann ein formloses Verbindungsmittel auf das zu diesem Zeitpunkt einseitig frei zugängliche Profilende des Karosseriedichtungselements aufgetragen werden.
C) Nach der Montage und dem Ablängen des Karosseriedichtungselements kann ein formloses Verbindungsmittel auf eines oder beide der zu diesem Zeitpunkt dann frei zugänglichen Profilenden des Karosseriedichtungselements aufgetragen werden.

Die Varianten A-C sind auch kombinierbar, so dass beispielsweise vor dem Start der Montage des Karosseriedichtungselements an der Karosserie auf das eine bereits zugängliche Profilende des Dichtungselements das formlose Verbindungsmittel aufgebracht wird (Variante A) und nach der Montage und dem Ablängen des Dichtungselements das formlose Verbindungsmittel zusätzlich auf das dann zugängliche weitere Profilende aufgebracht wird.

Sollte nach der Montage des Dichtungselements an der Fahrzeugtür ein geringer Spalt zwischen den freien Enden des Dichtungselements vorhanden sein, so kann dieser durch ein Zusammendrücken der Enden beim Verbinden durch das Verbindungsmittel dauerhaft geschlossen werden.

Bei der Variante des Ablängens des Karosseriedichtungselements von einer Vorratswicklung bzw. einem Endlosstrang und somit einem Auftrag des Verbindungsmittels erst im Produktionswerk des Fahrzeugherstellers besteht die Möglichkeit, unmittelbar vor dem Aufbringen des Karosseriedichtungselements an der Fahrzeugtür auf das zu diesem Zeitpunkt bereits einseitig vorliegende freie Profilende vor dem Start der Montage des Karosseriedichtungselements das formlose Verbindungsmittel aufzutragen und erst anschließend mit dem Montageprozess der Dichtung zu beginnen. Zudem kann beim anschließenden Verbindungsverfahren eine zur Aufbringung des Verbindungsmittels evtl. eingebrachte Prozesswärme direkt beim nachfolgenden Verbinden der Profilenden weiter genutzt werden.

Wird das formlose Verbindungsmittel erst dann aufgebracht, wenn das mindestens eine Karosseriedichtungselement an der Karosserie eines Fahrzeugs, beispielsweise einer Fahrzeugtür, zumindest abschnittsweise befestigt ist, hat dies den Vorteil, dass die Aufbringung des Verbindungsmittels und die Verbindung der Profilenden zeitlich kurz nacheinander und direkt am Fahrzeug umgesetzt werden können, so dass eine besonders rationale Fertigung ermöglicht wird. Beispielsweise kann das Ablängen abhängig vom jeweiligen Fahrzeugtyp und damit sehr individuell gestaltet werden, so dass nicht verschiedene Längen von Karosseriedichtungselementen bevorratet werden müssen und die Karosseriedichtungselemente in Form einer Vorratswicklung bzw. eines Endlosstrangs, welcher ein Vielfaches der Länge eines einzelnen an der Karosserie anzubringenden Karosseriedichtungselements aufweist, zum Hersteller der Fahrzeuge geliefert werden können. Die Montage des Karosseriedichtungselements an der Karosserie erfolgt dabei z.B. durch Abrollen des Dichtprofils von der Vorratswicklung bzw. dem Endlosstrang und Befestigung direkt an der Karosserie, wobei das Karosseriedichtungselement vorteilhaft erst dann abgelängt wird, wenn das zu verbindende Profilende erreicht ist, so dass kein oder nur ein geringer Spalt zwischen den Profilenden vorhanden ist. Zudem kann beim anschließenden Verbindungsverfahren eine zur Aufbringung des Verbindungsmittels evtl. eingebrachte Prozesswärme direkt beim nachfolgenden Verbinden der Profilenden weiter genutzt werden.

Des Weiteren wird eine Vorrichtung zur Durchführung des beschriebenen Verfahrens beansprucht, welche eine Halteeinrichtung zur positionsgenauen Halterung des mindestens einen Endes und eine Auftragseinrichtung zum Auftrag eines formlosen Verbindungsmittels auf das mindestens eine Ende umfasst.

In einer vorteilhaften Ausführungsform kann die Vorrichtung des Weiteren eine Heizeinrichtung zum Erhitzen des auf das mindestens eine Profilende aufgebrachten Verbindungsmittels und eine Positioniereinrichtung zum gegenseitigen Andrücken der Profilenden umfassen. Zudem kann ein Zwischenträger vorgesehen sein, mittels dem das Verbindungsmittel auf das mindestens eine Profilende aufgebracht wird.

Eine besonders schnelle und positionsgenaue Aufbringung des Verbindungsmittels kann dadurch erreicht werden, dass die Auftragseinrichtung als Spritz- oder Extrusionsdüse oder als Auftragsrolle ausgebildet ist. Alternativ kann die Auftragseinrichtung auch einen Verbindungsmittel-Behälter insbesondere mit einem seitlich verfahrbaren Abstreifer umfassen, welcher eine definierte Höhe über dem Behälterboden aufweist und damit das Verbindungsmittel im Behälterboden bis zu einer bestimmten gleichmäßigen Höhe abgestreift werden kann.

Vorteilhaft kann die Heizeinrichtung als IR-Heizelement, Heißluftgebläse, Mikrowellengenerator oder Laser ausgebildet sein, womit sich das mindestens eine Profilende schnell und räumlich begrenzt erhitzen lässt.

Um das Verbindungsmittel besonders positionsgenau aufzutragen, kann die Vorrichtung eine Schablone zum Abdecken derjenigen Abschnitte des Dichtungsprofils umfassen, auf welche kein Verbindungsmittel aufgebracht werden soll.

Weitere Besonderheiten und Vorzüge der Erfindung ergeben sich aus der folgenden Beschreibung eines bevorzugten Ausführungsbeispiels anhand der Zeichnungen. Es zeigen:
- Fig. 1: eine perspektivische Darstellung einer Vorrichtung zur Verbindung von Dichtungsprofilen mit einem in einer Halteeinrichtung gehaltenen Profilende eines Dichtungsprofils,
- Fig. 2: die Anordnung von Figur 1 mit einer Schablone zum Abdecken bestimmter Abschnitte des Dichtungsprofils,
- Fig. 3: die Anordnung von Figur 2 mit einem auf das Profilende aufgebrachten Verbindungsmittel,
- Fig. 4: die Anordnung von Figur 3 mit einem durch das Verbindungsmittel mit dem Profilende verbundenen weiteren Profilende,
- Fig. 5: eine perspektivische Darstellung eines ersten Verfahrensschritts zur Verbindung von Dichtungsprofilen an einer Fahrzeugkarosserie,
- Fig. 6: eine perspektivische Darstellung eines zweiten Verfahrensschritts zur Verbindung von Dichtungsprofilen an einer Fahrzeugkarosserie,
- Fig. 7: eine perspektivische Darstellung eines dritten Verfahrensschritts zur Verbindung von Dichtungsprofilen an einer Fahrzeugkarosserie,
- Fig. 8: eine perspektivische Darstellung eines vierten Verfahrensschritts zur Verbindung von Dichtungsprofilen an einer Fahrzeugkarosserie,
- Fig. 9: eine schematische Darstellung einer Vorrichtung zur Montage eines Dichtungsprofils an einer Fahrzeugtür, und
- Fig. 10: eine schematische Darstellung der Montage des Dichtungsprofils an der Fahrzeugtür von Figur 9.

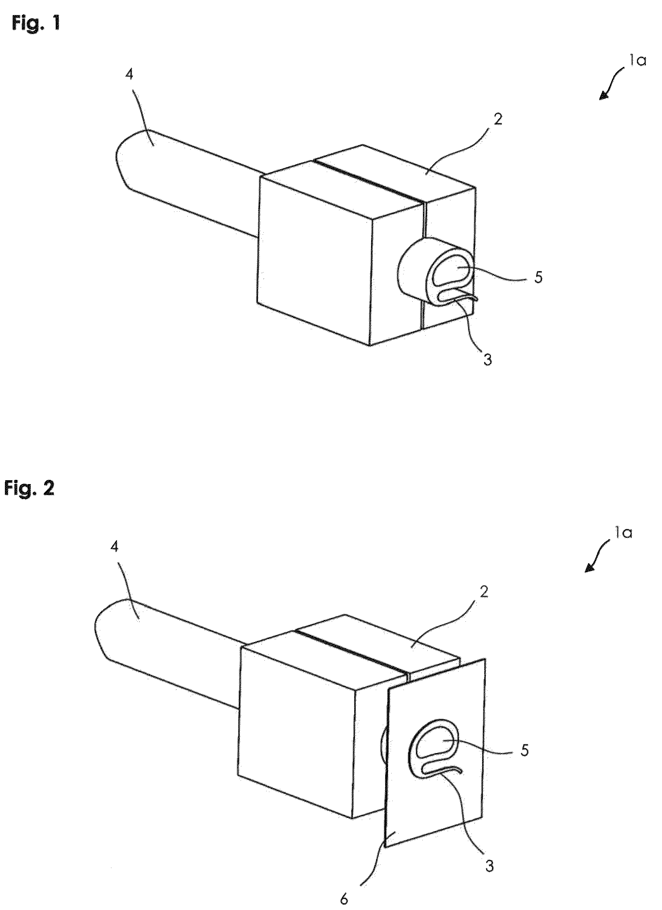

Figur 1 zeigt eine schematische Darstellung einer Vorrichtung 1a zur Verbindung des Stoßes von zwei Profilenden eines als längliches Dichtungsprofil ausgebildeten Karosseriedichtungselements. Die Vorrichtung 1a umfasst eine Halteeinrichtung 2 in welcher ein erstes Profilende 3 eines Dichtungsprofils 4 gehalten wird. Bei dem Dichtungsprofil 4 handelt es sich um einen Dichtungsstrang wie er im Fahrzeugbereich beispielsweise zur Abdichtung von Türen oder Fenstern verwendet wird. Das Dichtungsprofil 4 weist eine Hohlkammer 5 auf, welche sich über die gesamte Länge des Dichtungsprofils 4 erstreckt. Um das Dichtungsprofil 4 sicher zu halten, ist die Halteeinrichtung 2 mehrteilig ausgebildet und umgreift das Dichtungsprofil 4. Die Halteeinrichtung 2 weist hierzu eine Innenkontur auf, welche der Außenkontur des Dichtungsprofils 4 entspricht, so dass durch die großflächige Anlage eine sichere reibschlüssige Halterung des Dichtungsprofils 4 gewährleistet wird.

Das Profilende 3 steht geringfügig gegenüber der Halteinrichtung 2 vor, es kann jedoch auch vorgesehen sein, dass das Dichtungsprofil 4 derart in der Halteeinrichtung 2 positioniert wird, dass dieses bündig mit der Halteinrichtung abschließt.

In Figur 2 ist die Anordnung von Figur 1 in einem weiteren Prozessschritt gezeigt. Um den Auftrag eines Verbindungsmittels vorzubereiten und sicherzustellen, dass das Verbindungsmittel nur an der Stirnseite des Profilendes 3 aufgebracht wird, wird eine Schablone 6 verwendet, welche in Form einer dünnen Tafel ausgebildet ist und eine Aussparung entsprechend dem Querschnitt des Dichtungsprofils aufweist. Die Schablone 6 wird derart positioniert, dass das Profilende 3 in der Aussparung angeordnet ist und die Stirnseite des Profilendes 3 bündig mit der Schablone 6 abschließt. Hierdurch werden diejenigen Abschnitte des Dichtungsprofils 4, auf welche kein Verbindungsmittel aufgebracht werden soll, zuverlässig abgedeckt.

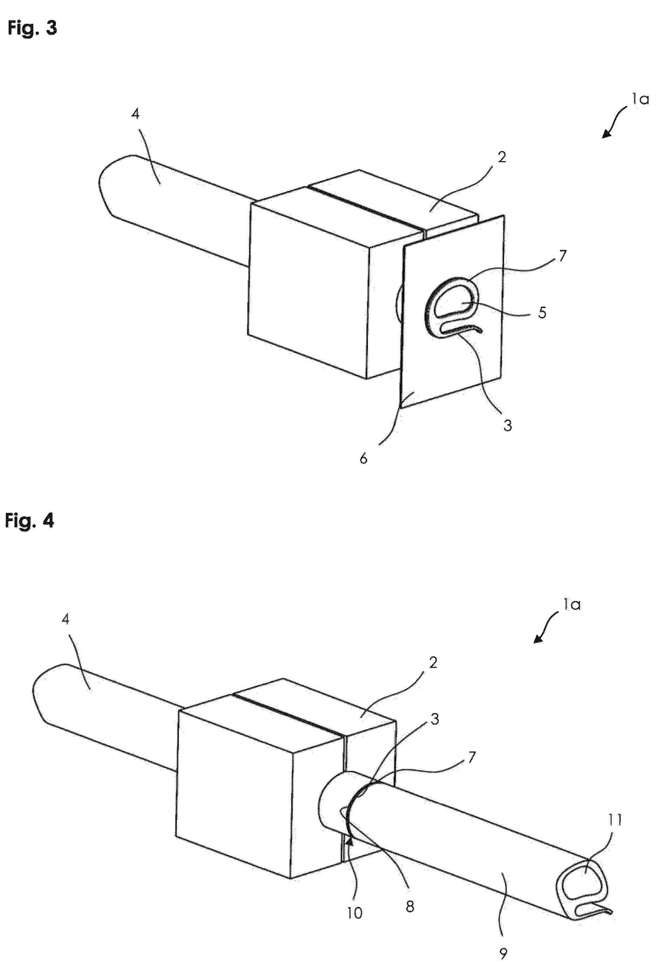

Figur 3 zeigt die Anordnung von Figur 2 in einem nachfolgenden Prozessschritt. Mittels einer hier nicht dargestellten Auftragseinrichtung wird auf das Profilende 3 an der Stirnseite ein Verbindungsmittel 7 dünnflächig aufgebracht. Bei der Auftragseinrichtung kann es sich beispielsweise um eine Spritzdüse zum Aufspritzen eines flüssigen oder pulverförmigen Verbindungsmittels oder um eine Auftragsrolle zum Auftragen eines flüssigen Verbindungsmittels handeln. Durch die Schablone 6 wird dabei gewährleistet, dass das Verbindungsmittel 7 lediglich auf die Stirnseite des Profilendes 3 aufgetragen wird.

Figur 4 zeigt die Anordnung von Figur 3 in einem weiteren Prozessschritt. Mittels einer nicht dargestellten Heizeinrichtung wird das Bindemittel 7 erhitzt und ein Profilende 8 eines weiteren Dichtungsprofils 9 gegen das erste Profilende 3 gedrückt. Hierdurch werden die Profilenden 3, 8 an dem sich ergebenden Stoß 10 stoffschlüssig verbunden. Anstelle des Profilendes 8 eines weiteren Dichtungsprofils 9 kann auch das zweite Profilende des Dichtungsprofils 4 mit dem ersten Profilende 3 verbunden werden, so dass sich ein ringförmiges Dichtungsprofil 4 ergibt.

Der Querschnitt des weiteren Dichtungsprofils 9 ist identisch zum Querschnitt des Dichtungsprofils 4 ausgebildet, insbesondere ist dort auch eine entsprechende Hohlkammer 11 vorgesehen. Durch den präzisen Auftrag des Verbindungsmittels 7 auf der Stirnseite des ersten Profilendes 3 kommt es bei der Verbindung der Profilenden 3, 8 zu keiner wesentlichen Querschnittsreduzierung, so dass Luft und Flüssigkeit zwischen den Hohlkammern 5, 11 der Dichtungsprofile 4, 9 ungehindert über den Stoß 10 hindurchtreten kann.

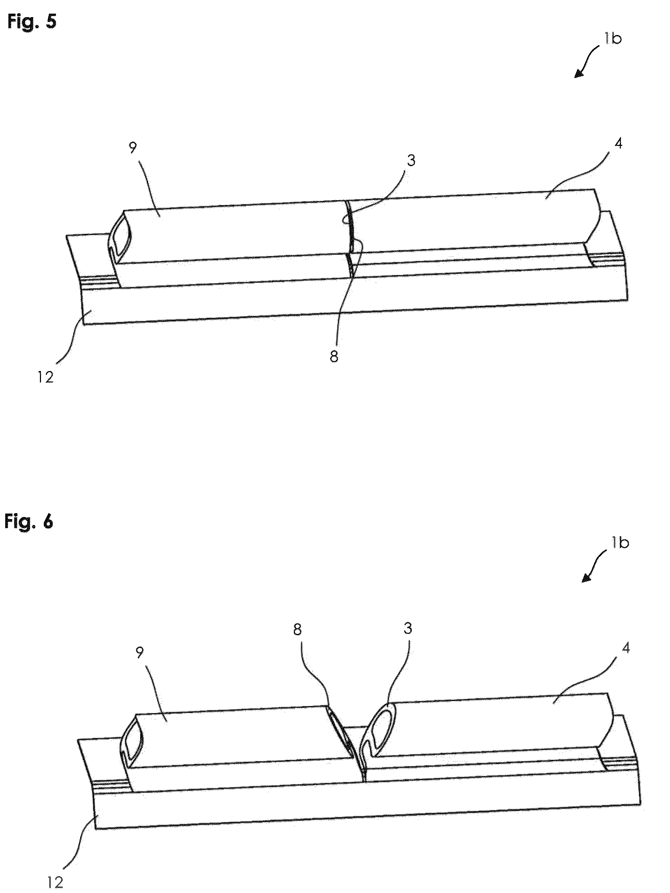

In Figur 5 ist eine perspektivische Darstellung eines ersten Verfahrensschritts zur Verbindung von Dichtungsprofilen 4, 9 gezeigt, welche entgegen der in den Figuren 1-4 gezeigten Ausgestaltung direkt an der Karosserie 12 eines Fahrzeugs befestigt ist. Bei den Dichtungsprofilen 4, 9 kann es sich um das selbe Profil eines Karosseriedichtungselements handeln, welches beispielsweise von einer Rolle als endloser Strang abgerollt und an der Karosserie 12 befestigt wurde, bis sich die Enden 3, 8 vorzugsweise spaltfrei gegenüberliegenden. Für ein möglichst geringes Spaltmaß kann zudem das Ablängen des Karosseriedichtungselements von dem Endlosstrang erst nach dem Abrollen und Befestigen an der Karosserie 12 erfolgen, wenn das zu verbindende Profilende beim Abrollen erreicht ist. Alternativ können die Dichtungsprofile 4, 9 auch separat ausgebildet sein und sich lediglich an den Profilenden 3, 8 gegenüberstehen. Die Abtrennung des Profils kann wie in den Zeichnungen gezeigt unter einen Winkel von 90°, d.h. senkrecht zur Längsrichtung, aber auch als Schrägschnitt unter einem von 90° abweichenden Winkel wie z.B. 45° erfolgen.

In Figur 6 ist eine perspektivische Darstellung eines zweiten Verfahrensschritts zur Verbindung der Dichtungsprofile 4, 9 von Figur 5 gezeigt. Ausgehend von der in Figur 5 dargestellten Anordnung werden hierbei die Dichtungsprofile 4, 9 an den Profilenden 3, 8 mittels einer nicht dargestellten Greifeinrichtung auseinandergezogen, um den Spalt zwischen den Profilenden 3, 8 zu vergrößern. In diesem Verfahrensschritt kann gegebenenfalls ein Erhitzen der Profilenden 3, 8 als Vorbereitung für die Aufbringung des formlosen Verbindungsmittels 7 erfolgen.

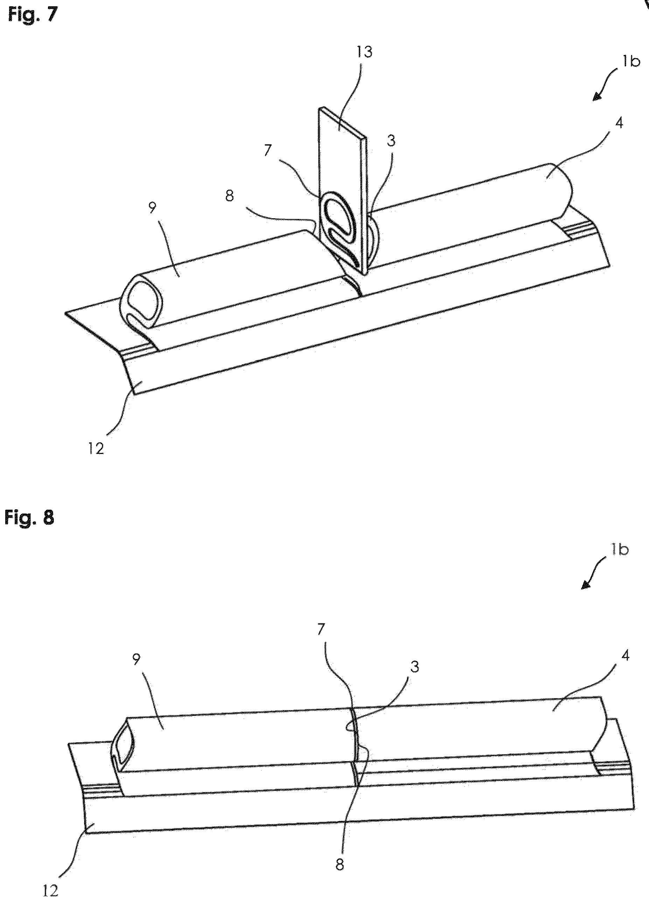

In Figur 7 ist eine perspektivische Darstellung eines dritten Verfahrensschritts zur Verbindung der Dichtungsprofile 4, 9 an der Karosserie 12 gezeigt. Ausgehend von dem in Figur 6 gezeigten Verfahrensschritt wird hierbei ein Zwischenträger 13 mit einem daran lösbar gehaltenen formlosen Verbindungsmittel 7 in den Spalt zwischen den Profilenden 3, 8 bewegt und das formlose Verbindungsmittel 7 gegenüber mindestens einem der Profilenden 3, 8 positioniert, so dass dieses auf das mindestens eine Profilende 3, 8 aufbringbar ist. Bei dem hier gezeigten Ausführungsbeispiel ist das formlose Verbindungsmittel 7 gemäß der Querschnittsform der Dichtungsprofile 4, 9 an den Profilenden 3, 8 ausgebildet und mittels Aufsprühen oder Aufrollen auf den Zwischenträger 13 aufgebracht. Das formlose Verbindungsmittel 7 kann jedoch auch in anderer Anordnung, beispielsweise punktförmig und insbesondere über die gesamte Fläche verteilt, auf dem Zwischenträger 13 angeordnet sein. Bezüglich der verschiedenen Aufbringungsmöglichkeiten auf den Zwischenträger, der unterschiedlichen Möglichkeiten der Haftung des formlosen Verbindungsmittel 7 an dem Zwischenträger 13, beispielsweise mittels elektrostatische Aufladung, sowie der Möglichkeiten für die Übertragung des formlosen Verbindungsmittels 7 auf die Profilenden 3, 8 wird auf obige allgemeine Ausführungen verwiesen.

Zur Übertragung des formlosen Verbindungsmittels 7 auf das mindestens eine Profilende 3, 8 ist bei der gezeigten Ausführungsform vorgesehen, dass die nicht dargestellten Greifeinrichtung die Profilenden 3, 8 zueinander bewegt und damit gegen das formlosen Verbindungsmittel 7 auf dem Zwischenträger 13 drückt, wodurch das formlosen Verbindungsmittel 7 auf die Profilenden 3, 8 übertragen wird. Das formlose Verbindungsmittel 7 kann dabei auf beiden, den Profilenden 3, 8 gegenüberliegenden Seiten des Zwischenträger 13 aufgebracht sein, um beide Profilenden 3, 8 in einem Arbeitsschritt mit einem formlosen Verbindungsmittel 7 zu versehen. Alternativ kann das formlose Verbindungsmittel 7 auch nur von einer Seite des Zwischenträger 13 auf eines der Profilenden 3, 8 übertragen werden. Sobald das formlose Verbindungsmittel 7 auf das mindestens eine Profilende 3, 8 übertragen wurde, wird der Zwischenträger 13 aus dem Spalt zwischen den Profilenden 3, 8 entfernt.

In Figur 8 ist eine perspektivische Darstellung eines vierten Verfahrensschritts zur Verbindung der Dichtungsprofile 4, 9 an der Karosserie 12 gezeigt. In diesem Verfahrensschritt werden die Profilenden 3, 8 mittels der nicht dargestellten Greifeinrichtung zusammengedrückt, so dass sich diese mit dem formlosen Verbindungsmittel 7 stoffschlüssig verbinden. Sobald das formlose Verbindungsmittel 7 ausreichend abgekühlt ist, kann die nicht dargestellte Greifeinrichtung von den Dichtungsprofilen 4, 9 entfernt werden, wodurch das Verbindungsverfahren abgeschlossen wird.

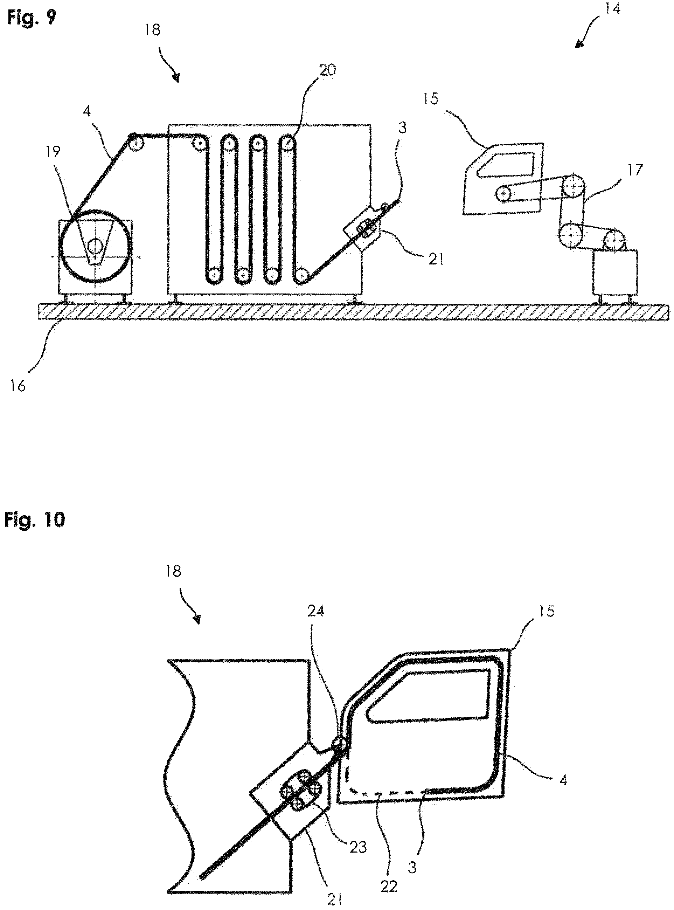

In Figur 9 ist eine schematische Darstellung einer Vorrichtung 14 zur Montage eines Karosseriedichtungsprofils an einer Fahrzeugkarosserie in Form einer Fahrzeugtür 15 gezeigt. Die Montagevorrichtung 14 ist auf einem Fundament 16 abgestützt und umfasst einen Roboter 17 mit einem Haltearm für ein präzises Bewegen und Positionieren der Fahrzeugtür 15 sowie eine Zuführeinrichtung 18 zur Zuführung eines Dichtungsprofils 4 zu der Fahrzeugtür 15. Die Zuführungsvorrichtung 18 umfasst hierzu eine Vorratswicklung 19, in welcher das Dichtungsprofil 4 bevorzugt als sogenannter Endlosstrang aufgewickelt ist, dessen Länge einem Vielfachen der Länge des abgelängten Karosseriedichtungselements entspricht.

Von der Vorratswicklung 19 wird das Dichtungsprofil 4 über mehrere verschiebbare Umlenkrollen 20, welche einen Puffer insbesondere beim Austausch einer leeren Vorratswicklung bilden, zu einer Halteeinrichtung 21 geführt. In der Halteeinrichtung 21 wird das Dichtungsprofils 4 nahe seines freien Endes gehalten und kann so präzise gegenüber der Fahrzeugtür 15 positioniert werden. Die Halteeinrichtung 21 ermöglicht zudem das Nachführen des Dichtungsprofils 4, um eine Montage des Dichtungsprofils 4 an der Fahrzeugtür 15 zu ermöglichen.

In Figur 10 ist eine schematische Darstellung der Montage des Dichtungsprofils 4 an der Fahrzeugtür 15 gezeigt. Wie dort zu entnehmen ist, wird die Fahrzeugtür 15 durch den hier nicht dargestellten Roboter 17 zur statischen Halteeinrichtung 21 derart positioniert, dass mit der Halteeinrichtung 21 das Dichtungsprofil 4 entlang einer geschlossenen Dichtungsbahn 22 an der Fahrzeugtür 15 befestigt werden kann.

Um das Dichtungsprofil 4 von der Vorratswicklung 19 abzurollen, umfasst die Halteeinrichtung 21 eine Transporteinrichtung 23, welche bei diesem Ausführungsbeispiel zwei Förderbänder umfasst, zwischen welchen das Dichtungsprofil 4 eingespannt ist. Mindestens eines der Förderbänder ist motorisch antreibbar, so dass das Dichtungsprofil 4 sehr präzise transportiert und zugeführt werden kann.

Zudem umfasst die Halteeinrichtung 21 ein Andruckelement 24 in Form einer Andruckrolle, mittels derer das Dichtungsprofil 4 entlang der Dichtungsbahn 22 an der Fahrzeugtür 15 andrückbar ist. Ausgehend von dem freien Profilende 3 kann somit durch kontinuierliches Nachfördern des Dichtungsprofils 4 und Positionieren der Fahrzeugtür 15 derart, dass das Andruckelement 24 mit dem Dichtungsprofil 4 entlang der Dichtungsbahn 22 bewegt wird, das Dichtungsprofil 4 auf der geschlossenen Dichtungsbahn 22 montiert werden bis das erste Profilende 3 erreicht ist. Zum Ablängen des Dichtungsprofils 4 umfasst die Halteeinrichtung 21 bevorzugt auch eine Trenneinrichtung zum Ablängen/Trennen des Dichtungsprofils 4.

Wenn bei der Montage des Dichtungsprofils 4 das Profilende 3 erreicht wurde, kann bevorzugt mittels entsprechender Detektionseinrichtungen das Profilende 3 präzise maschinell erfasst werden und das Dichtungsprofil 4 exakt derart abgelängt werden, dass zwischen dem ersten Profilende 3 und dem sich durch das Ablängen ergebenden zweiten Profilende kein oder nur ein sehr geringer Spalt vorhanden ist. Anschließend kann durch eine hier nicht dargestellte Auftragseinrichtung, welche in die Halteeinrichtung 21 integriert sein kann, ein formloses Verbindungsmittel auf mindestens eines der Profilenden aufgebracht werden. Nach einem Erhitzen des formlosen Verbindungsmittels durch eine Heizeinrichtung bevorzugt auf eine Schmelztemperatur können die Profilenden anschließend durch das formlose Verbindungsmittel verbunden werden, wodurch sich ein ringförmiges Karosseriedichtungselement ergibt.

Zur exakten Positionierung der Profilenden zueinander und gegebenenfalls zum Auseinanderziehen der Profilenden vor und Zusammendrücken der Profilenden nach der Aufbringung des formlosen Verbindungsmittels kann zudem eine Positioniereinrichtung vorgesehen sein. Wie bereits allgemein beschrieben, kann das formlose Verbindungsmittel zudem beispielsweise mittels eines Zwischenträgers aufgebracht werden. Zur Ausgestaltung des Zwischenträgers wird auf die allgemeine Beschreibung und die beschriebenen weiteren Ausführungsbeispiele verwiesen, welche ohne weiteres kombinierbar sind.

In einer alternativen Ausführungsform kann auch die Halteeinrichtung 21 beweglich ausgebildet sein und die Fahrzeugtür 15 statisch gehalten werden, so dass die Halteeinrichtung 21 mit dem Dichtungsprofil 4 entlang der Dichtungsbahn 22 an der Fahrzeugtür 15 bewegt wird, um das Dichtungsprofil 4 an der Fahrzeugtür 15 zu montieren. Dies hat den Vorteil, dass das Profilende 3 zusammen mit der Fahrzeugtür 15 nicht bewegt wird und daher das formlose Verbindungsmittel mittels einer Auftragseinrichtung auf das Profilende 3 ggf. noch einfacher während der Montage des Dichtungsprofils 4 aufgetragen werden kann. Weiter alternativ kann anstelle des Dichtungsprofils 4, welches als sogenannter Endlosstrang in der Vorratswicklung 19 bevorratet ist und eine vielfache Länge gegenüber der Länge des benötigten Karosseriedichtungselements aufweist, auch ein in einem vorgeschalteten Arbeitsschritt von einem Dichtungsprofil abgelängtes Karosseriedichtungselement mittels der Halteeinrichtung 21 an der Fahrzeugtür 15 befestigt werden. Hierbei entfällt bei einem passgenau abgelängten Karosseriedichtungselement der Prozessschritt des abschließenden Ablängens an der Fahrzeugtür. Wird das Karosseriedichtungselement vorab mit einem Übermaß abgelängt, ist dieses Übermaß nach der Montage an der Fahrzeugtür vor der Verbindung der Profilenden zu entfernen. Auf die weiteren anwendbaren alternativen Verfahren wird auf die allgemeine Beschreibung sowie die Beschreibung zu den vorangehenden Figuren verwiesen, welche ohne weiteres kombinierbar sind.

Mit der gezeigten Montagevorrichtung 14 können jedoch nicht nur die Enden eines Karosseriedichtungselements miteinander verbunden werden, sondern es ist ebenso möglich, ein Karosseriedichtungselement an ein ggf. bereits montiertes weiteres Karosseriedichtungselement anzusetzen und beide Karosseriedichtungselemente mittels dem beschriebenen Verfahren miteinander zu verbinden. Dies ist insbesondere vorteilhaft, wenn an der Karosserie abschnittsweise unterschiedliche Profilquerschnitte benötigt werden, so dass die einzelnen Abschnitte mittels dem Verfahren aus einzelnen Karosseriedichtungselementen spaltfrei zusammengesetzt werden können und fest verbunden sind. Auf diese Art ist es auch möglich, ein Karosseriedichtungselement an ein weiteres seitlich, also zwischen den Enden anzubringen, was beispielsweise bei Fensterdichtungen vorteilhaft ist.

### Bezugszeichenliste:

- 1a, 1b: Vorrichtung zur Verbindung des Stoßes von zwei Profilenden
- 2: Halteeinrichtung
- 3: Erstes Profilende
- 4: Dichtungsprofil
- 5: Hohlkammer
- 6: Schablone
- 7: Verbindungsmittel
- 8: Zweites Profilende
- 9: Weiteres Dichtungsprofil
- 10: Stoß
- 11: Hohlkammer
- 12: Karosserie
- 13: Zwischenträger
- 14: Montagevorrichtung
- 15: Fahrzeugtür
- 16: Fundament
- 17: Roboter
- 18: Zuführeinrichtung
- 19: Vorratswicklung
- 20: Umlenkrollen
- 21: Halteeinrichtung
- 22: Dichtungsbahn
- 23: Transporteinrichtung
- 24: Andruckelement

## Patentansprüche

1. Verfahren zum Verbinden des Stoßes (10) von zwei Enden (3; 8) mindestens eines Karosseriedichtungselements (4; 9), wobei die Enden (3; 8) zunächst voneinander beabstandet angeordnet sind und auf mindestens ein Ende (3) ein formloses Verbindungsmittel (7) aufgebracht wird, anschließend das Verbindungsmittel (7) erhitzt wird und die Enden (3; 8) zeitgleich oder nachfolgend in gegenseitigen Kontakt gebracht werden, wodurch die Enden (3; 8) am Stoß (10) durch das erhitzte Verbindungsmittel (7) stoffschlüssig verbunden werden.

2. Verfahren nach Anspruch 1,
**dadurch gekennzeichnet,**
**dass** als formloses Verbindungsmittel (7) ein Schüttgut, insbesondere Pulver oder Granulat, eine Flüssigkeit oder eine Paste, verwendet wird.

3. Verfahren nach Anspruch 1 oder 2,
**dadurch gekennzeichnet,**
**dass** das Verbindungsmittel (7) direkt oder über einen Zwischenträger (13) auf das mindestens eine Ende (3) aufgebracht wird.

4. Verfahren nach einem der Ansprüche 1 bis 3,
**dadurch gekennzeichnet,**
**dass** das Verbindungsmittel (7) durch Aufsprühen, Aufrollen oder punktweises Auftragen direkt auf das mindestens eine Ende (3) und/oder den Zwischenträger (13) aufgebracht wird.

5. Verfahren nach einem der Ansprüche 1 bis 4,
**dadurch gekennzeichnet,**
**dass** das Verbindungsmittel (7) mittels einer robotergeführten Düse aufgebracht wird, insbesondere punktweise.

6. Verfahren nach einem der Ansprüche 1 bis 5,
**dadurch gekennzeichnet,**
**dass** die Aufbringung des Verbindungsmittels (7) durch Kontaktieren des mindestens einen Endes (3) mit einer Verbindungsmittelschicht oder mit einem Zwischenträger (13) erfolgt.

7. Verfahren nach einem der Ansprüche 1 bis 6,
**dadurch gekennzeichnet,**
**dass** das auf das mindestens eine Ende (3) aufgebrachte Verbindungsmittel (7) mit Hilfe einer Heizeinrichtung, insbesondere einem IR-Heizelement, einem Heißluftgebläse, einem Mikrowellengenerator oder einem Laser, oder durch eine Restwärme des Karosseriedichtungselements (4; 9) aus einem vorgeschalteten Bearbeitungsschritt erhitzt wird.

8. Verfahren nach einem der Ansprüche 1 bis 7,
**dadurch gekennzeichnet,**
**dass** das mindestens eine Ende (3) und/oder der Zwischenträger (13) vor der Aufbringung des Verbindungsmittels (7) zur Verbesserung der Haftung an dem Ende (3) bzw. dem Zwischenträger (13) erhitzt wird.

9. Verfahren nach Anspruch 8,
**dadurch gekennzeichnet,**
**dass** das mindestens eine Ende (3) und/oder der Zwischenträger (13) vor der Aufbringung des Verbindungsmittels (7) auf eine Temperatur erhitzt wird, welche unterhalb der Schmelztemperatur des Verbindungsmittels (7) liegt, um eine bessere Haftung zu ermöglichen.

10. Verfahren nach einem der Ansprüche 1 bis 9,
**dadurch gekennzeichnet,**
**dass** Abschnitte des mindestens einen Karosseriedichtungselements(4) und/oder des Zwischenträgers (13), auf welche kein Verbindungsmittel (7) aufgebracht werden soll, mit Hilfe einer Schablone (6) abgedeckt werden.

11. Verfahren nach einem der Ansprüche 1 bis 10,
**dadurch gekennzeichnet,**
**dass** das Karosseriedichtungselement (4; 9) vor einer Befestigung an einer Karosserie (15) eines Fahrzeugs passgenau oder mit Übermaß abgelängt wird oder das Karosseriedichtungselement (4; 9) von einer Vorratswicklung (19) entnommen und erst nach einer zumindest abschnittsweisen Befestigung an einer Karosserie (15) eines Fahrzeugs abgelängt wird.

12. Verfahren nach einem der Ansprüche 1 bis 11,
**dadurch gekennzeichnet,**
**dass** das formlose Verbindungsmittel (7) vor dem Ablängen auf ein Ende (3; 8) des Karosseriedichtungselements (4; 9) aufgebracht wird und/oder das formlose Verbindungsmittel (7) nach dem Ablängen auf mindestens eines der Enden (3; 8) des Karosseriedichtungselements (4; 9) aufgebracht wird.

13. Verfahren nach einem der Ansprüche 1 bis 12,
**dadurch gekennzeichnet,**
**dass** die Enden (3; 8) einen Winkel von 90° aufweisen, also senkrecht zur Längsrichtung des Karosseriedichtungselements (4; 9) orientiert sind, oder einen von 90° abweichenden Winkel, insbesondere einen Winkel von 45°, zur Längsrichtung des Karosseriedichtungselements (4; 9) aufweisen.

14. Vorrichtung zur Durchführung des Verfahrens nach einem der Ansprüche 1 bis 13, umfassend eine Halteeinrichtung (2) zur positionsgenauen Halterung des mindestens einen Endes (3) und eine Auftragseinrichtung zum Auftrag eines formlosen Verbindungsmittels (7) auf das mindestens eine Ende (3).

15. Vorrichtung nach Anspruch 14,
**gekennzeichnet durch**
eine Heizeinrichtung zum Erhitzen des auf das mindestens eine Ende (3) aufgebrachten Verbindungsmittels (7) und eine Positioniereinrichtung zum gegenseitigen Andrücken der Enden (3; 8).
